# EUROPÄISCHE PATENTSCHRIFT

(11) **EP 1 470 740 B1**
(45) Veröffentlichungstag und Bekanntmachung des Hinweises auf die Patenterteilung: **05.09.2007**
(21) Anmeldenummer: 03706271.8
(22) Anmeldetag: 30.01.2003
(51) Int. Cl.: H05B 6/00

(54) **VORRICHTUNG ZUR AUFHEIZUNG VON KALTTEILEN GROSSER THERMISCHER MASSE**
DEVICE FOR HEATING COLD PARTS WITH A HIGH THERMAL MASS
DISPOSITIF PERMETTANT D'ECHAUFFER DES PARTIES FROIDES A MASSE THERMIQUE ELEVEE

(30) Priorität: 31.01.2002 DE 10203789
(43) Veröffentlichungstag der Anmeldung: 27.10.2004
(73) Patentinhaber: SIEMENS AKTIENGESELLSCHAFT, 80333 München (DE)
(72) Erfinder: FRANK, Michael, 91080 Uttenreuth (DE); VAN HASSELT, Peter, 91058 Erlangen (DE)
(86) Internationale Anmeldenummer: PCT/DE2003/000261
(87) Internationale Veröffentlichungsnummer: WO 2003/065767

(56) Entgegenhaltungen:
- EP-A- 1 089 031
- WO-A-98/47186
- US-A- 4 688 137
- PATENT ABSTRACTS OF JAPAN vol. 012, no. 402 (E-673), 25. Oktober 1988 (1988-10-25) & JP 63 142621 A (SUMITOMO ELECTRIC IND LTD), 15. Juni 1988 (1988-06-15)
- PATENT ABSTRACTS OF JAPAN vol. 013, no. 459 (E-832), 17. Oktober 1989 (1989-10-17) & JP 01 176692 A (MATSUSHITA ELECTRIC IND CO LTD), 13. Juli 1989 (1989-07-13)

## Beschreibung

Die Erfindung bezieht sich auf eine Vorrichtung zum Aufheizen von in einem thermisch isolierenden Kryostatgehäuse für supraleitende Wicklungen angeordneten Kaltteilen großer thermischer Masse, mit einer an eine äußere Heizstromquelle anschließbaren, im Kryostatgehäuse angeordneten elektrischen Heizung.

Beim Einsatz supraleitender Wicklungen muss der Kaltteil zur Vermeidung von thermischen Verlusten gegenüber der Außenwelt gut thermisch isoliert aufgebaut sein (Kryostat). So liegen z. B. die Verluste für einen Kryostaten mit ca. 80 cm Länge und 30 cm Durchmesser leicht deutlich unter 30 W. Wenn Wartungsarbeiten am Kaltteil notwendig werden, muss dessen Temperatur von der Betriebstemperatur, beispielsweise 20 K, auf Raumtemperatur gebracht werden. Wenn hierzu nur die für den Betrieb notwendigerweise minimierten thermischen Verluste in der vorstehend genannten Größenordnung zur Verfügung stehen, resultieren daraus Aufwärmzeiten auf Wochenskala, was für einen Praxisbetrieb natürlich nicht tragbar ist. Um dem Aufwärmprozess beschleunigen zu können, werden deshalb elektrische Heizungen im Kaltteil eingebaut, um im Bedarfsfall zusätzliche Aufwärmleistung zur Verfügung zu haben. Diese Heizungen müssen natürlich von außen mit elektrischer Energie versorgt werden.

Üblicherweise ist der Aufbau dabei so getroffen, dass die Anschlüsse der elektrischen Heizung aus dem Kryostatinnenteil mittels Vakuumdurchführungen nach außen geführt werden. Neben den Stromzuführungen für die eigentlichen Spulenwicklungen, sind also auch noch zusätzlichen Durchführungen für die Heizungen erforderlich. Jede Vakuumdurchführung verursacht aber einen zusätzlichen Aufwand und damit Kosten. Darüber hinaus ist im Interesse einer Aufrechterhaltung eines statischen Vakuums (gegebenenfalls über Jahre hinweg), sowie auch zur Minimierung der über jede Durchführung erhöhten Verlustwärme, die Zahl der Durchführungen so gering wie möglich zu halten.

Der Erfindung liegt daher die Aufgabe zugrunde, eine Vorrichtung der eingangs genannten Art so auszugestalten, dass ohne Erhöhung der Zahl der Durchführungen eine elektrische Zusatzheizung betrieben werden kann.

Zur Lösung dieser Aufgabe ist erfindungsgemäß vorgesehen, dass die elektrische Heizung als ohmsche Heizung ausgebildet und parallel zu den supraleitenden Wicklungen geschaltet ist, und dass die Heizstromquelle eine an die äußeren Supraleiter-Zuleitungen angeschlossene Wechselstromquelle ist.

Damit die Heizungen im Normalbetrieb keine nennenswerten Zusatzverluste hervorrufen, müssen sie hochohmig im Vergleich zur supraleitenden Magnetwicklung ausgeführt werden. Dabei kann man allerdings nicht einfach einen sehr hohen ohmschen Widerstand auswählen, um die Zusatzverluste während des Betriebs des Kryostaten möglichst klein zu halten, da mit zunehmendem Widerstand ja auch die durch die äußere Wechselstromquelle im Aufheizfall am ohmschen Widerstand entstehende Heizleistung abnimmt. Erfindungsgemäß sollte daher der Widerstand der ohmschen Heizung so gewählt sein, dass im normalen Betriebsfall die daran entstehende Verlustleistung durch die an der supraleitenden Bindung abfallende Betriebsgleichspannung deutlich unter der Wärmeverlustleistung des Kryostaten liegt, es sollte also nicht ein Verlust nahe Null angestrebt werden.

Schließlich liegt es auch noch im Rahmen der Erfindung, eine Umschalteinrichtung zur Zuschaltung einer Gleichstromquelle an die äußeren Zuleitungen bei Erreichen der Sprungtemperatur der supraleitenden Wicklungen vorzusehen, sodass dann neben der ohmschen Heizung auch noch die dann nicht mehr supraleitenden Wicklungen als ohmsche Heizung betrieben werden können.

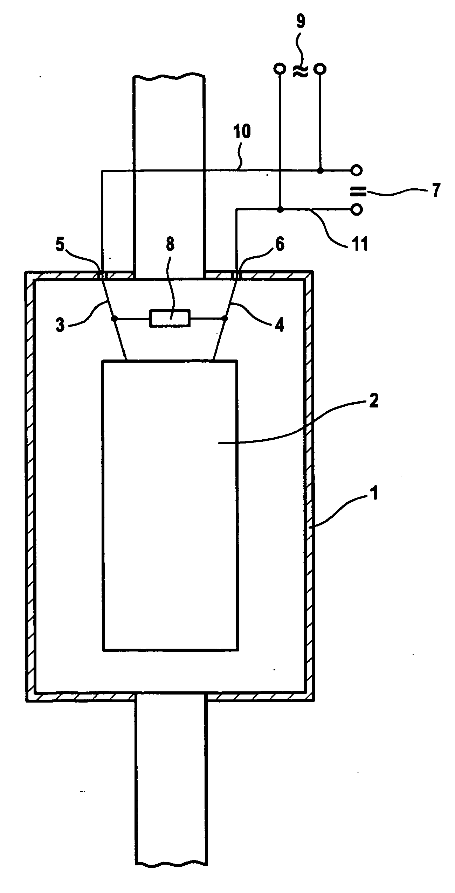

Weitere Vorteile, Merkmale und Einzelheiten der Erfindung ergeben sich aus der nachfolgenden Beschreibung eines Ausführungsbeispiels sowie anhand der Zeichnung, die schematisch einen Drehstrom-Synchronmotor mit supraleitender Läuferwicklung mit einer erfindungsgemäßen Zusatzheizung darstellt.

Im äußeren Kryostatgehäuse 1 ist die nur schematisch angedeutete Läuferwicklung 2 angedeutet, die mit Gleichstrom-Versorgungsleitungen 3, 4 versehen ist, die durch Durchführungen 5 und 6 des Gehäuses nach außen geführt und an eine Gleichspannungsquelle 7 angelegt sind.

Um im Bedarfsfall ein rasches Erwärmen der Kaltteile großer thermischer Masse eines solchen Drehstrom-Synchronmotors zur Verfügung zu haben, ist erfindungsgemäß eine ohmsche Heizung, also ein Widerstand 8 vorgesehen, der den supraleitenden Spulenwicklungen des Läufers 2 parallel geschaltet ist. Zur Stromversorgung für den Aufheizfall dient eine Wechselstromquelle 9, die an die äußeren Stromanschlüsse 10 und 11 der supraleitenden Wicklungen des Läufers 2 angeschlossen ist.

Nehmen wir an, dass bei einer bestimmten Ausführung der Läufer eine Induktivität von 3 H aufweist. Im Betriebsfall liegt der Spannungsabfall an der Spule typisch unter 1 V. Eine parallel zur Wicklung geschaltete ohmsche Heizung 8 in Form des Widerstandes mit einem Widerstandswert von 100 Ω verursacht damit eine zusätzliche Verlustleistung von unter 10 mW und ist damit verglichen zu den thermischen Verlusten des Kryostaten von z. B. 30 W vernachlässigbar.

Wenn geheizt werden soll, wird an die Stromzuführungsanschlüsse anstelle der Gleichstromquelle 7 für den Normalbetrieb die Wechselstromquelle 9 angeschlossen, die eine Frequenz von z. B 10 kHz haben soll. Für diese Frequenz liegt die Impedanz der Wicklung des Läufers 2 bei ca. 188 kΩ. Damit kann ohne Weiteres eine Wechselspannung von 200 V an die Anschlüsse angelegt werden, was in der ohmschen Heizung 8 eine Heizleistung von 400 W zur Folge hat. Da diese Heizleistung nicht von der Kaltteiltemperatur abhängt (im Gegensatz zu den thermischen Verlusten, die mit sinkender Temperaturdifferenz zwischen Kaltteil und Umgebungstemperatur abnehmen), verkürzt sich die Aufwärmzeit um mehr als den Faktor, der sich aus dem Verhältnis 400 W zu 30 W ergibt. Dabei sollte auch berücksichtigt werden, dass zur Vermeidung übergroßer thermischer Gradienten im Kaltteil und damit verbundener mechanischer Belastungen unter Umständen auch geringere Heizleistungen wünschenswert sind, was aber durch Reduzierung der angelegten Spannung problemlos eingestellt werden kann. Sobald die thermischen Gradienten nicht mehr so groß sind, kann ohne Weiteres wieder zu einer erhöhten Heizleistung übergegangen werden, was durch ein entsprechendes Steuerprogramm selbsttätig erzielbar ist.

Die erfindungsgemäße Vorrichtung hat den Vorteil, dass für die Zuführung der Heizleistung nicht notwendigerweise komplett neue Heizgeräte entwickelt werden müssen, sondern dass man z. B. auf modifizierte (Röhren)-Leistungsverstärker aus der Unterhaltungselektronik oder der Ultraschalltechnik zurückgreifen kann. Die vorstehend angeführten Zahlenwerte, insbesondere die Frequenz der Wechselspannung, sind nur als ein Beispiel zu sehen. Auch ein Wert von 50 oder 60 Hz, also Netzfrequenz, sind als Heizstromquelle einsetzbar. Damit ginge im obigen Beispiel ca. 10 % des Heizstroms durch die Spule.

## Patentansprüche

1. Vorrichtung zum Aufheizen von in einem thermisch isolierenden Kryostatgehäuse angeordneten Kaltteilen großer thermischer Masse einer supraleitenden Wicklung mittels einer an eine äußere Heizstromquelle anschließbaren, im Kryostatgehäuse angeordneten elektrischen Heizung, **dadurch gekennzeichnet, dass** die elektrische Heizung als ohmscher Heizungswiderstand (8) ausgebildet und parallel zu der supraleitenden Wicklung geschaltet ist, und dass die Heizstromquelle eine an die äußeren Supraleiter-Zuleitungen (10, 11) angeschlossene Wechselstromquelle (9) ist.

2. Vorrichtung nach Anspruch 1, **dadurch gekennzeichnet, dass** der ohmsche Heizungswiderstand (8) so gewählt ist, dass im normalen Betriebsfall die daran entstehende Verlustleistung durch die an der supraleitenden Wicklung abfallende Betriebsgleichspannung deutlich unter der Wärmeverlustleistung des Kryostaten liegt.

3. Vorrichtung nach Anspruch 1 oder 2, **gekennzeichnet durch** eine Umschalteinrichtung zur Zuschaltung einer Gleichstromquelle an die äußeren Zuleitungen (10, 11) bei Erreichen der Sprungtemperatur der supraleitenden Wicklung.

## Claims

1. Apparatus for heating cold parts having a high thermal mass, which are arranged in a thermally insulating cryostat housing, of a superconducting winding by means of an electric heater which may be connected to an external heater current source and is arranged in the cryostat housing, **characterized in that** the electric heater is in the form of a heating resistor (8) and is connected in parallel with the superconducting winding, and **in that** the heater current source is an alternating current source (9) which is connected to the external superconductor supply lines (10, 11).

2. Apparatus according to Claim 1, **characterized in that** the heating resistor (8) is selected such that, during normal operation, the power loss produced owing to the operating DC voltage drop across the superconducting winding is markedly less than the heat loss performance of the cryostat.

3. Apparatus according to Claim 1 or 2, **characterized by** a switching device for connecting a direct current source to the external supply lines (10, 11) when the critical temperature of the superconducting winding is reached.

## Revendications

1. Dispositif de chauffage de parties froides de grande masse thermique, disposées dans une enveloppe de cryostat isolante du point de vue thermique, d'un enroulement supra--conducteur au moyen d'un chauffage électrique pouvant être raccordé à une source extérieure de courant de chauffage et disposé dans l'enveloppe de cryostat, **caractérisé en ce que** le chauffage électrique est constitué en résistance (8) ohmique de chauffage et est monté en parallèle à l'enroulement supraconducteur, et **en ce que** la source de courant de chauffage est une source (9) de courant alternatif raccordé aux lignes (10, 11) extérieures d'entrée du supraconducteur.

2. Dispositif suivant la revendication 1, **caractérisé en ce que** la résistance (8) ohmique de chauffage est choisie de façon à ce que, dans le cas normal de fonctionnement, la puissance perdue, ainsi créée par la tension continue de fonctionnement chutant aux bornes de l'enroulement supraconducteur, est nettement inférieure à la puissance calorifique perdue du cryostat.

3. Dispositif suivant la revendication 1 ou 2, **caractérisé par** un dispositif de commutation pour brancher une source de courant continu sur les lignes (10, 11) extérieures d'entrée, lorsque est atteinte la température de variation brusque de la conductivité de l'enroulement supraconducteur.
